# EUROPÄISCHE PATENTSCHRIFT

(11) **EP 1 153 388 B1**
(45) Veröffentlichungstag und Bekanntmachung des Hinweises auf die Patenterteilung: **02.04.2003**
(21) Anmeldenummer: 99941459.2
(22) Anmeldetag: 24.07.1999
(51) Int. Cl.: G11B 5/716

(54) **MAGNETISCHER AUFZEICHNUNGSTRÄGER MIT HOHER AUFZEICHNUNGSDICHTE**
MAGNETIC RECORDING SUPPORT WITH HIGH RECORDING DENSITY
MILIEU D'ENREGISTREMENT MAGNETIQUE A HAUTE DENSITE

(30) Priorität: 26.08.1998 DE 19838799
(43) Veröffentlichungstag der Anmeldung: 14.11.2001
(73) Patentinhaber: EMTEC Magnetics GmbH, 67059 Ludwigshafen (DE)
(72) Erfinder: ILMER, Andreas, D-67069 Ludwigshafen (DE); LENZ, Werner, D-67098 Bad Dürkheim (DE); KRESS, Ria, D-67063 Ludwigshafen (DE); HEILMANN, Peter, D-67098 Bad Dürkheim (DE); VEITCH, Ronald, D-67133 Maxdorf (DE); JAKUSCH, Helmut, D-67227 Frankenthal (DE); HOFFMANN, Erich, D-69126 Heidelberg (DE)
(74) Vertreter: Schweiger, Georg, Dr.
(86) Internationale Anmeldenummer: EP9905309
(87) Internationale Veröffentlichungsnummer: WO00013176

(56) Entgegenhaltungen:
- EP-A- 0 373 563
- EP-A- 0 390 391
- EP-A- 0 490 646
- EP-A- 0 493 114
- EP-A- 0 717 396
- EP-A- 0 911 815
- US-A- 5 455 104

## Beschreibung

Die Erfindung betrifft einen magnetischen Aufzeichnungsträger, welcher mindestens zwei Schichten auf einem nichtmagnetischen Schichtträger umfaßt, wobei die untere Schicht mindestens ein Pigment und ein Bindemittel enthält und die obere bindemittelhaltige Schicht als magnetisches Pigment ein Metallpulver oder Metall-Legierungspulver enthält.

Moderne magnetische Aufzeichnungsträger werden den stetig wachsenden Anforderungen nur dann gerecht, wenn sie größere Speicherkapazitäten, schnellere Zugriffszeit und höhere Übertragungsraten der gespeicherten Informationen ermöglichen. Diese Aufzeichnungsträger müssen deshalb zum einen so aufgebaut sein, daß die Magnetpigmente in der Aufzeichnungsschicht eine ausreichend hohe Dichte aufweisen, um hohe Speicherkapazitäten zu gewährleisten, zum anderen aber muß die Magnetschichtdicke sehr gering sein, um ein direktes Überschreiben der Daten beim Neuaufzeichnen ohne vorherigen Löschvorgang zu ermöglichen. Beispielsweise besitzen magnetische Aufzeichnungsträger mit hoher Speicherkapazität heute nur noch Magnetschichtdicken von weniger als ca. 1 µm.

Zur Realisierung solcher dünnen Magnetschichten mit hoher Speicherdichte wurden in den letzten Jahren magnetische Aufzeichnungsträger entwickelt, in denen eine bindemittelfreie ferromagnetische Metallschicht mit einer sehr niedrigen Dicke mittels Vakuumtechnik aufgebracht wurde. Die so hergestellten Aufzeichnungsträger erreichen zwar einen hohen Wiedergabepegel, jedoch bereitet die Massenproduktion solcher Medien im Vergleich zu magnetischen Aufzeichnungsträgern, bei denen die magnetischen Pigmente in Bindemitteln dispergiert sind, immer noch große Schwierigkeiten. Da sich diese ME-Bänder unter dem Einfluß von Luftsauerstoff nicht unverändert lagern lassen, ist auch ihre Anwendung nicht problemlos möglich.

Neuentwicklungen in den letzten Jahren haben gezeigt, daß sich die Forderung nach geringer Schichtdicke auch durch eine dünne magnetische Schicht erfüllen läßt, in welcher die feinteiligen magnetischen Partikel in einer polymeren Bindemittelmatrix dispergiert sind und welche auf eine unmagnetische Unterschicht aufgebracht wird.

Solche Aufzeichnungsträger sind beispielsweise in den Veröffentlichungen US 2 819 186, DE-OS 43 02 516, EP 0 520 155, EP 0 566 100, EP 0 566 378, EP 0 682 802 sowie den DE-OS 44 43 896, 195 04 930, 195 11 872, 195 11 873, 195 11 875 und 195 11 876 beschrieben.

Die vorgenannten magnetischen Aufzeichnungsträger beschreiben doppelschichtig aufgebaute Medien, bei welchen die obere magnetische Schicht eine Schichtdicke zwischen 0,01 bis etwa um 1 µm, vorzugsweise 0,1-0,4 µm aufweist. Die Dicke der unteren unmagnetischen Schicht beträgt zwischen 0,5- 8 µm. In der oberen Schicht befinden sich vorzugsweise feinteilige magnetische Metall- beziehungsweise Metall-Legierungs-Partikel, während die untere unmagnetische Schicht feinteilige unmagnetische Pigmente enthält, welche in einigen Fällen nadelförmige Struktur besitzen, wie es beispielsweise in den vorgenannten Schriften EP 0 566 378 und EP 0 682 802 beschrieben ist.

Untersuchungen der Anmelderin haben bestätigt, daß das Überschreibverhalten von doppelschichtigen magnetischen Aufzeichnungsträgern in erster Linie von der Schichtdicke der magnetischen Oberschicht abhängt. Das anzustrebende gute Überschreibverhalten von Metal-Evaporated-Bändern (nachfolgend als ME-Bänder bezeichnet) kann beispielsweise dadurch erzielt werden, daß die Oberschicht extrem dünn gestaltet wird (z.B. 0,12 µm).

Es wird allerdings beobachtet, daß insbesondere bei der Aufzeichnung bei längeren Wellenlängen der Pegel ebenfalls mit abnehmender Magnetschichtdicke abnimmt, das heißt, daß Pegel und Überschreibbarkeit ein gegenläufiges Verhalten zeigen. Ein geringer Pegel führt aber in der Regel zu einer erhöhten Störanfälligkeit des aufgezeichneten Signals, was sich in einer erhöhten Bit-Error-Rate bei digitaler Aufzeichnung äußert.

Die Bit-Error-Rate wird jedoch auch durch eine schlechte Überschreibbarkeit erhöht, da in diesem Falle eine alte Aufnahme nur ungenügend gelöscht und damit die Qualität der Neuaufnahme beeinträchtigt wird. Wenn dieser Einfluß zu hoch wird und Fehler nicht mehr korrigiert werden können, ist die Wiedergabe der Aufnahme nicht mehr möglich. Metallpigment-Bänder (nachfolgend als MP-Bänder bezeichnet) weisen bei gleicher Magnetschichtdicke einen geringeren Pegel als ME-Bänder auf. Eine Anhebung des Pegels durch Erhöhung der Magnetschichtdicke würde zu einer schlechteren Überschreibbarkeit führen.

Die Aufgabe der Erfindung bestand daher darin, einen bindemittelhaltigen magnetischen Aufzeichnungsträger zur Verfügung zu stellen, der gleichzeitig eine gute Überschreibbarkeit und einen hohen Wiedergabepegel erreicht.

Erfindungsgemäß wurde die Aufgabe mit einem magnetischen Aufzeichnungsträger überraschend gelöst, welcher mindestens zwei Schichten auf einem nichtmagnetischen Schichtträger umfaßt, wobei die untere Schicht mindestens ein Pigment und ein Bindemittel enthält und die obere bindemittelhaltige Schicht als magnetisches Pigment ein Metallpulver oder Metall-Legierungspulver enthält und eine Dicke von weniger als 0,3 µm aufweist, wobei die untere Schicht ein magnetisches Pigment enthält, so daß die Koerzitivkraft der unteren Schicht nicht höher ist als zwei Drittel der Koerzitivkraft der oberen Schicht, und wobei die remanente Magnetisierung der unteren Schicht mindestens 32 kA/m beträgt.

In einer bevorzugten Ausführungsform ist die Koerzitivkraft der unteren Schicht nicht höher als die Hälfte der Koerzitivkraft der oberen Schicht.

Weitere Einzelheiten der Erfindung lassen sich der nachfolgenden Beschreibung, sowie den Beispielen entnehmen.

Nachfolgend wird der erfindungsgemäße magnetische Aufzeichnungsträger näher erläutert.

Als unmagnetische flexible Schichtträger eignen sich bekannte Filme aus Polyestern, wie Polyethylenterephthalat oder Polyethylennaphthalat sowie Polyolefinen, Cellulosetriacetat, Polycarbonaten, Polyamiden, Polyimiden, Polyamidoimiden, Polysulfonen, Aramiden oder aromatischen Polyamiden.

Die untere Schicht enthält erfindungsgemäß magnetische Pigmente, deren magnetische Werte so eingestellt werden, daß sie die Aufzeichnung der oberen magnetischen Schicht nicht stören.

Als besonders geeignet haben sich nadelförmige magnetische Chromoxidpigmente mit einer spezifischen Oberfläche (bestimmt nach der BET-Methode) zwischen 50 und 100 m²/g erwiesen, die eine Koerzitivkraft H_{c} zwischen 15 bis 40 kA/m, vorzugsweise 20-30 kA/m besitzen.

Erfindungsgemäß können in der unteren Schicht auch γ-Fe₂O₃ -Pigmente, insbesondere mit Kobalt dotiertes γ-Fe₂O₃ mit einer Koerzitivkraft H_{c} im Bereich von 15-80 kA/m, vorzugsweise 50-70 kA/m, und mit einer nach der BET-Methode bestimmten spezifischen Oberfläche von 30-50 m²/g, sowie ebenfalls Magnetite, Ferrite oder Metallpulver als magnetische Pigmente eingesetzt werden.

Diese Pigmente können entweder allein oder in Mischungen untereinander oder mit weiteren anorganischen oder organischen, insbesondere nichtmagnetischen Pigmenten, verwendet werden.

Die remanente Magnetisierung Mr in Längsrichtung des magnetischen Aufzeichnungsträgers wird durch die Sättigungsmagnetisierung des magnetischen Pigmentes, dessen Menge und Ausrichtung eingestellt. Der Wert für die remanente Magnetisierung der unteren magnetischen Schicht sollte hierbei mindestens 32 kA/m betragen, vorzugsweise jedoch mindestens 35 kA/m und insbesondere mindestens 40 kA/m.

Die remanente Magnetisierung der unteren Schicht sollte jedoch nicht höher als 150 kA/m sein, um keine Störung des Aufzeichnungsverhaltens der oberen Schicht durch die untere Schicht zu bewirken.

Die mittlere Teilchenlänge der magnetischen Pigmente der unteren Schicht liegt im Bereich von 0,05-0,25 µm, vorzugsweise von 0,1 bis 0,2 µm und sollte 0,25 µm nicht übersteigen, um eine glatte Oberfläche der unteren Schicht und damit eine gute Basis für eine nachfolgend aufzubringende obere Schicht zu ermöglichen.

Neben den erfindungsgemäßen magnetischen Pigmenten kann die untere Schicht weitere Bestandteile wie polymere Bindemittel, weitere Pigmente, Antistatika, Ruße, Gleitmittel, Vernetzer, Netzmittel, Dispergierhilfsmittel und dergleichen enthalten, welche an sich bekannt und in den vorab genannten Dokumenten näher beschrieben sind. So werden als polymere Bindemittel beispielsweise Polyurethane und Vinylpolymere eingesetzt, welche in einer bevorzugten Ausführungsform polare Gruppen, insbesondere Sulfonatgruppen, aufweisen.

Bekannte Gleitmittel sind z. B. Fettsäure oder -ester; als Vernetzer wird z. B. Polyisocyanat eingesetzt. Außerdem kann die untere Schicht außer dem magnetischen Pigment weitere unmagnetische Pigmente, beispielsweise α-Fe₂O₃,Cr₂O₃,TiO₂, SiO₂, Al₂O₃, BaSO₄, Bornitrid, SnO₂, CaCO₃, ZrO₂, TiC, SiC, Sb₂O₃, ZnO, CeO₂, Ruße sowie weitere Pigmente enthalten.

Die obere magnetische Schicht enthält ein ferromagnetisches Metallpigment beziehungsweise Metall-Legierungspigment in hoher Konzentration. Beispiele solcher Metallpigmente können ebenfalls den vorgenannten Dokumenten entnommen werden. Die Metallpulverpigmente enthalten als Hauptbestandteil Fe, Ni und Co, ferner bedarfsweise Al, Si, S, Sc, Ti, V, Cr, Cu, Y, Mo, Rh, Pd, Ag, Sn, Sb, Te, Ba, Ta, W, Re, Au, Hg, Pb, Bi, La, Ce, Pr, Nd, P, Mn, Zn, Sr oder B, einzeln oder im Gemisch, und können an ihrer Oberfläche eine Schutzhülle gegen Oxidation oder gegen sonstige schädliche Einflüsse aufweisen. Die Metallpulver haben eine spezifische BET-Oberfläche im Bereich von 40-80 m²/g, die mittlere Achsenlänge beträgt höchstens 200 nm, der Achsendurchmesser liegt im Bereich von 10-30 nm. Die Koerzitivkraft ist größer als 100 kA/m und die spezifische Magnetisierung ist größer als 80 Am²/kg. Vorzugsweise hat die obere magnetische Schicht eine Koerzitivkraft von mindestens 140 kA/m sowie eine remanente Magnetisierung von mindestens 250 kA/m. Ferner enthält die obere magnetische Schicht die üblichen Zusätze wie polymere Bindemittel, die auch polare Gruppen enthalten können, oder entsprechende Bindemittelmischungen sowie Dispergierhilfsmittel, unmagnetische Pigmente, Gleitmittel, Härtungsmittel, leitfähigkeitserhöhende Mittel und Netzmittel, die sämtlich aus dem Stand der Technik bekannt sind.

Das Verfahren zur Herstellung der magnetischen Dispersion ist an sich bekannt und umfaßt mindestens eine Knetstufe, eine Dispergierstufe und gegebenenfalls eine Mischstufe, die vor und nach den vorhergehenden Stufen vorgesehen sein kann. Die jeweiligen Stufen können jeweils aus zwei oder mehr Arbeitsschritten zusammengesetzt sein. Bei der Herstellung der Zusammensetzung können alle Ausgangsmaterialien, nämlich das ferromagnetische Pulver, die Bindemittel, die Ruße, die Schleifmittel oder Stützpigmente, die Antistatikmittel, die Schmiermittel, die Netzmittel sowie die Dispergierhilfsmittel und die Lösungsmittel (beispielsweise Tetrahydrofuran, Methylethylketon, Cyclohexanon oder Dioxan) gleich zu Beginn des Verfahrens oder später während des Ablaufs des Verfahrens dem Reaktoraggregat zugesetzt werden. Der Vernetzer, sowie gegebenenfalls ein Vernetzungskatalysator wird vorzugsweise nach Abschluß der Dispersionsherstellung zugegeben.

Nach Feinfiltration durch engmaschige Filter mit einer Weite von höchstens 5 µm werden die Dispersionen mittels einer konventionellen Beschichtungsvorrichtung mit Geschwindigkeiten im üblichen Bereich aufgetragen, im Magnetfeld in im wesentlichen longitudinaler Aufzeichnungsrichtung ausgerichtet, getrocknet und nachfolgend einer Kalanderbehandlung und gegebenenfalls einer weiteren Oberflächen-Glättungsbehandlung unterzogen.

Dabei bedeutet "im wesentlichen longitudinal ausgerichtet", daß die magnetischen Teilchen zwar im wesentlichen in der Schichtebene in Aufzeichnungsrichtung orientiert vorliegen, jedoch auch schräg zur Schichtebene orientiert angeordnet sein können.

Zur Herstellung der erfindungsgemäßen magnetischen Aufzeichnungsträger kann die Beschichtung mittels Rakelgießer, Messergießer, Abstreifgießer, Extrudergießer, Reverse-Roll-Coater oder Kombinationen daraus erfolgen. Beide Schichten können simultan im Naß/Naß-Verfahren oder im Naß/Trocken-Verfahren aufgetragen werden.

Besonders bevorzugt zur Herstellung der erfindungsgemäßen magnetischen Aufzeichnungsträger ist ein Messergießer mit mindestens einer, vorzugsweise zwei oder mehr Austrittsöffnungen, welcher aus der DE-OS 195 04 930 bekannt ist. Ebenfalls geeignet ist ein Extrudergießer mit mindestens einer, vorzugsweise zwei oder mehr Austrittsöffnungen für die magnetischen Dispersionen, wobei den Öffnungen gegenüberliegend auf der anderen Seite des flexiblen Schichtträgers die Kante oder der Luftspalt eines Magneten gegenübersteht und wobei dessen Feldlinien im wesentlichen parallel zur Laufrichtung des Schichtträgers verlaufen. Solche Anordnungen sind aus der EP-B-0 654 165 oder der FR 2 734 500 bekannt.

Nach der dem Beschichten folgenden Trocknung und Kalandrierung wird der so erhaltene magnetische Aufzeichnungsträger in die gewünschte Gebrauchsform geschnitten und den üblichen elektromagnetischen sowie mechanischen Prüfungen unterzogen.

Der Meßwert für das Überschreibverhalten wird wie folgt in mehreren Schritten ermittelt.
1. Aufzeichnung eines kombinierten Signals, bestehend aus einer kurzwelligen Komponente, vorzugsweise bei 0,5 µm und einem langwelligen Signal mit einer Wellenlänge von beispielsweise 3 µm. Die langwellige Komponente hat dabei eine kleinere, beispielsweise um 20 dB reduzierte Amplitude gegenüber dem kurzwelligen Signal. Das kombinierte Signal wird vor der Aufzeichnung in einen Begrenzer eingespeist, welcher ein Ausgangssignal mit einer konstanten Amplitude liefert, in dem das langwellige Signal als zeitliche Modulation der Nulldurchgänge mit kleinem Hub enthalten ist.
   Dieses Signal wird im optimalen Arbeitspunkt auf das Band aufgezeichnet.
2. Wiedergabe der Aufzeichnung und Messung des Pegels der zu überschreibenden langwelligen Komponente.
3. Überschreibung der Aufzeichnung durch die kurzwellige Komponente.
4. Wiedergabe der überschriebenen Aufzeichnung und nochmalige Messung des Pegels der langwelligen Komponente.
   Der Überschreib-Meßwert OW (Overwrite) ist die Differenz in dB der Meßwerte zwischen Schritt 2 und Schritt 4.

Führt man eine derartige Messung an einem Magnetbandpaar mit magnetischer/unmagnetischer Unterschicht und etwa gleichartiger Oberschicht mit gleicher Schichtdicke durch und variiert dabei die Wellenlänge des zu überschreibenden Signals so erhält man für den Overwrite-Meßwert Verläufe, die graphisch darstell bar sind.

Die Meßwerte zeigen, daß der Overwrite-Vorteil durch das erfindungsgemäße magnetische Aufzeichnungsmaterial mit magnetischer Unterschicht über einen Wellenlängenbereich von ca. 10 µm bis 0,6 µm wirksam ist. Besonders günstige Ergebnisse werden dann erhalten, wenn eine sehr dünne magnetische Oberschicht, deren Schichtdicke weniger als 0,3 µm beträgt, auf eine magnetische Unterschicht, deren Schichtdicke bevorzugt 0,5-2 µm beträgt, aufgebracht wird.

Vorteile lassen sich auch dann noch erkennen, wenn die oberen Schichtdicken der zu vergleichenden Materialien nicht genau gleich sind. Hat zum Beispiel eine Probe mit magnetischer Unterschicht eine geringere Schichtdicke der Oberschicht als die Vergleichsprobe mit unmagnetischer Unterschicht, kann aus magnetischen Flußmessungen in Verbindung mit oben gennanter graphischer Darstellung der aus der unterschiedlichen Schichtdicke resultierende Vorteil ermittelt und das Ergebnis um diesen Faktor korrigiert werden. Auch in diesem Falle ergeben sich Vorteile beim Überschreibverhalten, die sich auf das Vorhandensein der magnetischen Unterschicht im erfindungsgemäßen magnetischen Aufzeichnungsträger zurückführen lassen.

Es ergeben sich im längerwelligen Bereich für das Overwrite-Verhalten und den Pegel gegensinnige Verläufe in Abhängigkeit von der Oberschichtdicke. Dieses gegenläufige Verhalten gilt sowohl für Bänder mit unmagnetischer Unterschicht als auch - auf höherem Niveau - für Bänder mit magnetischer Unterschicht.

Es gelingt bei bandförmigen magnetischen Aufzeichnungsträgern mit unmagnetischer Unterschicht nur schlecht oder gar nicht, einen geeigneten Kompromiß zu finden, der sowohl gutes Overwrite-Verhalten als auch ausreichenden Pegel bietet. Der erfindungsgemäße magnetische Aufzeichnungsträger zeigt dagegen den Vorteil, daß eine zusätzliche Reserve erhalten wird, die sowohl zur Verbesserung des Overwrites als auch zur Verbesserung des Pegels genutzt werden kann, so daß eine Kompromißlösung möglich ist und damit eine gezielte Einstellung dieser Eigenschaften erfolgen kann.

Die Erfindung wird nun anhand der nachfolgenden Beispiele näher erläutert, ohne daß die Erfindung als hierauf beschränkt angesehen werden soll.

### Beispiel 1:

| Zusammensetzung der oberen Schicht | Gewichtsteile |
|---|---|
| Ferromagnetisches Metallpigment | 100 |
| H_{c}: 183 kA/m: σ_{s:} 140 Am² kg⁻¹ | |
| BET: 54 m²/g; 1: 100 nm; d: 20 nm | |
| Fe: Co=76 Gew %: 24 Gew % | |
| α - Aluminiumoxid | |
| Partikeldurchmesser: ca. 220 nm | 10 |
| Ruß | |
| BET: 35 m²/g; Primärteilchengr.: 50 nm | 1,5 |
| VC-Copolymer mit polaren Gruppen | 8 |
| Polymerisationsgrad: 300 | |
| VC-Anteil: 85 Gew.%; Epoxid-Gehalt: 3 Gew. % | |
| Gehalt an SO₃Na: 65 mmol/kg | |
| Polyurethan mit polaren Gruppen | 6 |
| Mw=30000; ,Tg (DSC): 70°C | |
| Gehalt an SO₃Na: 100 mmol/kg | |
| Stearinsäure/Palmitinsäure 1:1 | 2,5 |
| Butylstearat | 0,5 |
| Vernetzer | 2,2 |
| Umsetzungsprodukt von | |
| 3 Mol Toluylendiisocyanat mit | |
| 1 Mol Trimethylolpropan | |
| Lösemittel (THF/Dioxan 1:1) | 530 |

| Zusammensetzung der unteren Schicht | Gewichtsteile |
|---|---|
| Chromoxid (73 m²/g BET; H_{c}: 21 kA/m) | 100 |
| Ruß (Primärteilchengröße: 25 nm) | 29 |
| Vinylpolymer mit polaren Gruppen *) | 13 |
| Polyurethan mit polaren Gruppen *) | 15 |
| Stearinsäure/Palmitinsäure | 1,5 |
| Butylstearat | 1 |
| Vernetzer | 3 |
| Lösemittel (THF, Dioxan) | 658 |

| | |
|---|---|
| * Kenndaten s. Zusammensetzung der oberen Schicht. | |

Die beschichtungsfertigen Dispersionen für die obere und untere Schicht wurden durch Kneten in einem Batchkneter, portionsweises Verdünnen, anschließendes Mahlen in einer Rührwerksmühle sowie Auflacken unter Zugabe des Vernetzers, von Butylstearat und der zur Einstellung der Beschichtungsviskositäten erforderlichen Lösemittelmengen hergestellt.

Der Auftrag beider Schichten auf eine vorher mit einer 0,5-0,6 µm dicken Rückschicht versehene PET-Folie (Dicke: 6,4 µm) erfolgte im Naß-in-Naß-Verfahren mittels einer Beschichtungsvorrichtung, wie sie in der DE-OS 195 04 930 näher beschrieben ist. Vor dem Trocknen wurde die beschichtete Folie zur Ausrichtung der magnetischen Pigmente durch eine Richtstrecke, bestehend aus mehreren Spulen mit einer Feldstärke von 200 kA/m, hindurch geführt. Nach dem Trocknen bei 80°C wurde die Folienbahn in einem Stahl/Stahl-Kalander mit 6 Spalten bei 85°C und einem Liniendruck von 200 kg/cm satiniert und anschließend in 8 mm breite Video-Bänder geschnitten. Die Schichtdicken für die obere und untere Schicht betrugen 0,26 µm beziehungsweise 1,1 µm.

### Beispiel 2:

Es wurde verfahren wie in Beispiel 1, jedoch hatte die obere Schicht eine Dicke von 0,12 µm.

### Beispiel 3:

Es wurde verfahren wie in Beispiel 1, jedoch hatte die Unterschicht folgende Zusammensetzung:

| Zusammensetzung der unteren Schicht | Gewichtsteile |
|---|---|
| α-Fe₂O₃ (54 m²/g BET) | 50 |
| Co-dotiertes γ-Fe₂O₃ (36 m²/g BET; H_{c} 66 kA/m) | 50 |
| Ruß (Primärteilchengröße: 25 nm) | 29 |
| Vinylpolymer mit polaren Gruppen | 13 |
| Polyurethan mit polaren Gruppen | 15 |
| Stearinsäure/Palmitinsäure | 1,5 |
| Butylstearat | 1 |
| Vernetzer | 3 |
| Lösemittel (THF,Dioxan) | 580 |

Die Dicke der oberen Schicht betrug 0,125 µm, die der unteren Schicht 1,1µm.

### Vergleichsbeispiel 1:

Es wurde verfahren wie im Beispiel 1, jedoch hatte die untere Schicht die folgende Zusammensetzung:

| Zusammensetzung der unteren Schicht | Gewichtsteile |
|---|---|
| Vinylpolymer mit polaren Gruppen | 8 |
| Polyurethan mit polaren Gruppen | 4 |
| Chromoxid (70 m²/g BET, H_{c}: < 0,5 kA/m | 63 |
| Al₂O₃ (Primärteilchengröße 0,4 µm) | 12 |
| Ruß (Primärteilchengröße 30nm) | 25 |
| Gleitmittel | 10,6 |
| Dispergierhilfsmittel | 2 |
| Vernetzer | 4 |
| Lösemittel (Tetrahydrofuran, Dioxan) | 4/6 |

Die Dicke der oberen Schicht betrug 0,15 µm, die der unteren Schicht 1,4 µm.

Da die absoluten Schichtdicken für die obere und untere Schicht mit der nötigen Genauigkeit nicht auf direktem Wege meßbar sind, wurden sie über die Messung der magnetischen Flußwerte mit einem handelsüblichen Schwingmagnetometer (z. B. einem Schwingmagnetometer der Firma Digital Measurement Systems) mit Hilfe von Eichproben (REM-Dünnschnitte) auf rechnerischem Wege ermittelt.

### Vergleichsbeispiel 2:

Es wurde verfahren wie in Beispiel 1, jedoch hatte die Unterschicht folgende Zusammensetzung:

| Zusammensetzung der unteren Schicht | Gewichtsteile |
|---|---|
| α-Fe₂O₃ (54 m²/g BET) | 50 |
| Metallpigment (57m²/g BET; H_{c}: 134 kA/m) | 50 |
| Ruß (Primärteilchengröße: 25 nm) | 29 |
| Vinylpolymer mit polaren Gruppen | 13 |
| Polyurethan mit polaren Gruppen | 15 |
| Stearinsäure/Palmitinsäure | 1,5 |
| Butylstearat | 1 |
| Vernetzer | 3 |
| Lösemittel (THF, Dioxan) | 670 |

Die Schichtdicken für die obere und untere Schicht betrugen: 0,19 µm und 1,5 µm.

### Vergleichsbeispiel 3:

Es wurde ein Monoschichtband mit einer Schichtdicke von 1,1 µm hergestellt, wobei nur die obere Schicht mit der in Beispiel 1 beschriebenen Zusammensetzung vergossen wurde.

Die nachfolgende Tabelle 1 zeigt die Meßergebnisse aus den vorab beschriebenen Beispielen.

Da das bei einer Wellenlänge von 3 µm gemessene Überschreibverhalten den Overwrite-Vorteil repräsentativ darstellt, werden die hierbei erzielten Werte, stellvertretend für den gesamten Kurvenverlauf, angegeben.

### Die einzelnen Meßwerte bedeuten:

- Dicke OS =: Trockenschichtdicke der oberen Schicht
- H_{c}OS =: Koerzitivkraft der oberen Schicht
- MrOS: remanente Magnetisierung der oberen Schicht
- H_{c}US =: Koerzitivkraft der unteren Schicht
- Mr US =: remanente Magnetisierung der unteren Schicht.
- Pegel 3 µm =: Ursprünglicher Wiedergabepegel bei 3 µm Wellenlänge
- OW 3 µm =: Ursprünglicher Wiedergabepegel minus Wiedergabepegel nach
dem Überschreiben = Überschreibdämpfung
Überschriebenes Signal: 3 µm Wellenlänge
Überschreibendes Signal: 0,5 µm Wellenlänge
- ΔOW 3µm =: Differenz der Überschreibdämpfung des Beispielbandes zu
der Überschreibdämpfung eines vergleichbaren Bandes mit unmagnetischer Unterschicht
- Pegel 0,5 µm =: Wiedergabepegel des überschreibenden Signals (Datensignal)

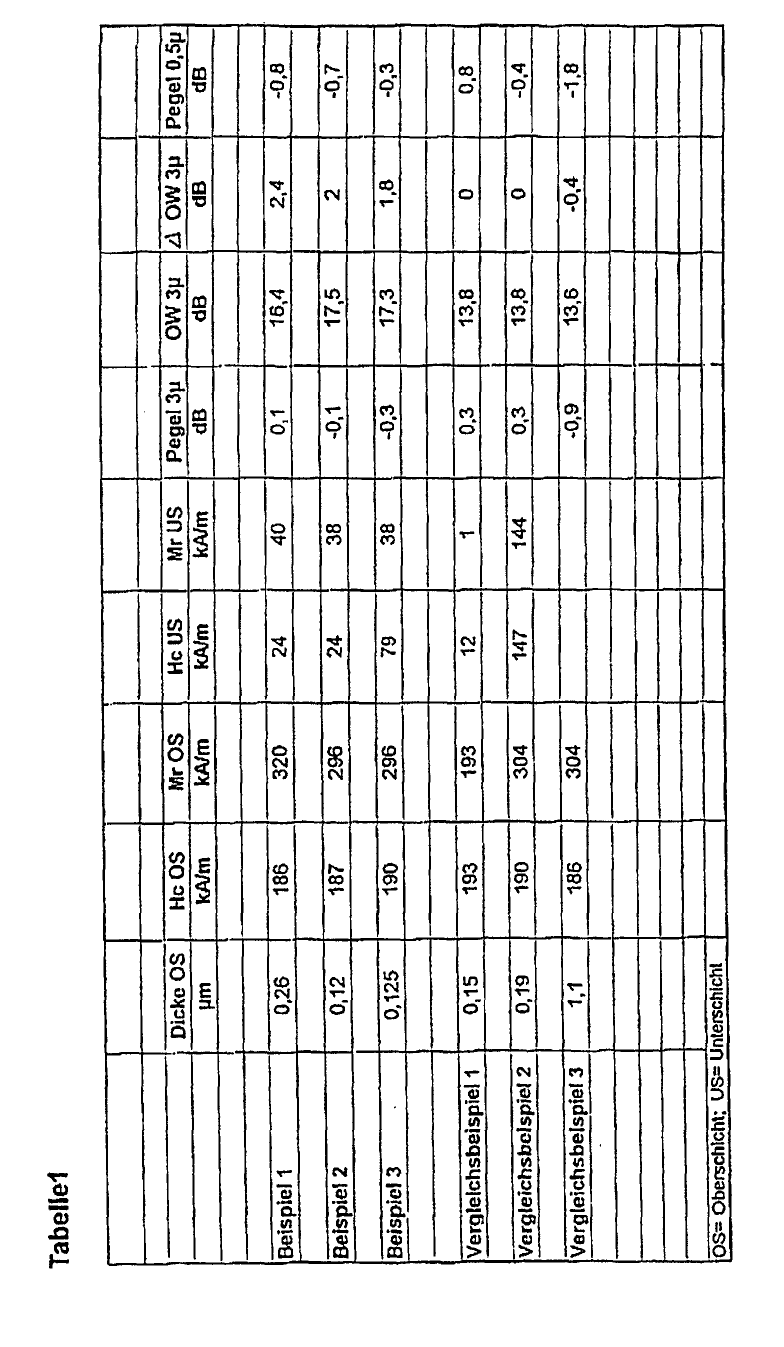

## Patentansprüche

1. Magnetischer Aufzeichnungsträger, umfassend mindestens zwei Schichten auf einem nichtmagnetischen Schichtträger, wobei die untere Schicht mindestens ein Bindemittel und ein Pigment enthält und die obere bindemittelhaltige Schicht als magnetisches Pigment ein Metallpulver oder Metall-Legierungspulver enthält und eine Dicke von weniger als 0,3 µm aufweist, **dadurch gekennzeichnet, daß** die untere Schicht ein magnetisches Pigment enthält, wobei die Koerzitivkraft H_{c} der unteren Schicht nicht höher als zwei Drittel der Koerzitivkraft H_{c} der oberen Schicht ist und wobei die remanente Magnetisierung Mr der unteren Schicht mindestens 32 kA/m beträgt.

2. Magnetischer Aufzeichnungsträger nach Anspruch 1, **dadurch gekennzeichnet, daß** die Koerzitivkraft H_{c} der unteren Schicht nicht höher als die Hälfte der Koerzitivkraft der oberen Schicht ist.

3. Magnetischer Aufzeichnungsträger nach Anspruch 1, **dadurch gekennzeichnet, daß** die remanente Magnetisierung Mr der unteren Schicht 32 bis 150 kA/m beträgt.

4. Magnetischer Aufzeichnungsträger nach Anspruch 1 bis 3, **dadurch gekennzeichnet, daß** die Schichtdicke der unteren Schicht 0,5 bis 2 µm beträgt.

5. Magnetischer Aufzeichnungsträger nach Anspruch 1 bis 4, **dadurch gekennzeichnet, daß** das magnetische Pigment in der unteren Schicht ein nadelförmiges magnetisches Chromoxidpigment mit einer Koerzitivkraft H_{c} von 15 bis 40 kA/m und einer BET-Oberfläche von 50 bis 100 m²/g ist.

6. Magnetischer Aufzeichnungsträger nach Anspruch 5, **dadurch gekennzeichnet, daß** die Koerzitivkraft des magnetischen Chromoxidpigmentes in der unteren Schicht 20 bis 30 kA/m beträgt.

7. Magnetischer Aufzeichnungsträger nach Anspruch 1 bis 4, **dadurch gekennzeichnet, daß** das magnetische Pigment in der unteren Schicht ein dotiertes oder nicht dotiertes γ-Fe₂O₃Pigment mit einer Koerzitivkraft H_{c} von 15 bis 80 kA/m und einer BET-Oberfläche von 30 bis 50 m²/g ist.

8. Magnetischer Aufzeichnungsträger nach Anspruch 7, **dadurch gekennzeichnet, daß** das magnetische Pigment in der unteren Schicht ein mit Kobalt dotiertes γ-Fe₂O₃-Pigment ist.

9. Magnetischer Aufzeichnungsträger nach Anspruch 7 oder 8, **dadurch gekennzeichnet, daß** die Koerzitivkraft des γ-Fe₂O₃-Pigmentes in der unteren Schicht 50 bis 70 kA/m beträgt.

10. Magnetischer Aufzeichnungsträger nach Anspruch 1 bis 9, **dadurch gekennzeichnet, daß** das magnetische Pigment in der unteren Schicht eine mittlere Teilchenlänge von 0,05 bis 0,25 µm aufweist.

11. Magnetischer Aufzeichnungsträger nach Anspruch 10, **dadurch gekennzeichnet, daß** die mittlere Teilchenlänge des magnetischen Pigmentes in der Unterschicht 0,1 bis 0,2 µm beträgt.

12. Magnetischer Aufzeichnungsträger nach Anspruch 1, **dadurch gekennzeichnet, daß** die untere Schicht außerdem ein unmagnetisches Pigment enthält.

13. Magnetischer Aufzeichnungsträger nach Anspruch 12, **dadurch gekennzeichnet, daß** das unmagnetische Pigment α-Fe₂O₃ ist.

## Claims

1. A magnetic recording medium comprising at least two layers on a nonmagnetic substrate, the lower layer containing at least one binder and one pigment and the upper binder-containing layer containing a metal powder or metal alloy powder as magnetic pigment and having a thickness of less than 0.3 µm, wherein the lower layer contains a magnetic pigment, the coercive force H_{c} of the lower layer being not more than two thirds of the coercive force H_{c} of the upper layer and the residual induction Mr of the lower layer being at least 32 kA/m.

2. A magnetic recording medium as claimed in claim 1, wherein the coercive force H_{c} of the lower layer is not more than half the coercive force of the upper layer.

3. A magnetic recording medium as claimed in claim 1, wherein the residual induction Mr of the lower layer is from 32 to 150 kA/m.

4. A magnetic recording medium as claimed in any of claims 1 to 3, wherein the layer thickness of the lower layer is from 0.5 to 2 µm.

5. A magnetic recording medium as claimed in any of claims 1 to 4, wherein the magnetic pigment in the lower layer is an acicular magnetic chromium oxide pigment having a coercive force H_{c} of from 15 to 40 kA/m and a BET surface area of from 50 to 100 m²/g.

6. A magnetic recording medium as claimed in claim 5, wherein the coercive force of the magnetic chromium oxide pigment in the lower layer is from 20 to 30 kA/m.

7. A magnetic recording medium as claimed in any of claims 1 to 4, wherein the magnetic pigment in the lower layer is a doped or undoped γ-Fe₂O₃ pigment having a coercive force H_{c} of from 15 to 80 kA/m and a BET surface area of from 30 to 50 m²/g.

8. A magnetic recording medium as claimed in claim 7, wherein the magnetic pigment in the lower layer is a cobalt-doped γ-Fe₂O₃ pigment.

9. A magnetic recording medium as claimed in claim 7 or 8, wherein the coercive force of the γ-Fe₂O₃ pigment in the lower layer is from 50 to 70 kA/m.

10. A magnetic recording medium as claimed in any of claims 1 to 9, wherein the magnetic pigment in the lower layer has a mean particle length of from 0.05 to 0.25 µm.

11. A magnetic recording medium as claimed in claim 10, wherein the mean particle length of the magnetic pigment in the lower layer is from 0.1 to 0.2 µm.

12. A magnetic recording medium as claimed in claim 1, wherein the lower layer additionally contains a nonmagnetic pigment.

13. A magnetic recording medium as claimed in claim 12, wherein the nonmagnetic pigment is α-Fe₂O₃.

## Revendications

1. Support d'enregistrement magnétique, comprenant au moins deux couches sur un support de couches non magnétique, la couche inférieure contenant au moins un liant et un pigment et la couche supérieure contenant le liant contenant, comme pigment magnétique, une poudre de métal ou une poudre d'alliage de métal et présentant une épaisseur inférieure à 0,3 µm, **caractérisé en ce que** la couche inférieure contient un pigment magnétique, la force coercitive H_{c} de la couche inférieure n'étant pas supérieure à deux tiers de la force coercitive H_{c} de la couche supérieure et la magnétisation rémanente Mᵣ de la couche inférieure étant d'au moins 32 kA/m.

2. Support d'enregistrement magnétique selon la revendication 1, **caractérisé en ce que** la force coercitive H_{c} de la couche inférieure n'est pas supérieure à la moitié de la force coercitive de la couche supérieure.

3. Support d'enregistrement magnétique selon la revendication 1, **caractérisé en ce que** la magnétisation rémanente Mᵣ de la couche inférieure est de 32 à 150 kA/m.

4. Support d'enregistrement magnétique selon les revendications 1 à 3, **caractérisé en ce que** l'épaisseur de couche de la couche inférieure est de 0,5 à 2 µm.

5. Support d'enregistrement magnétique selon les revendications 1 à 4, **caractérisé en ce que** le pigment magnétique dans la couche inférieure est un pigment d'oxyde de chrome magnétique en forme d'aiguilles présentant une force coercitive H_{c} de 15 à 40 kA/m et une surface BET de 50 à 100 m²/g.

6. Support d'enregistrement magnétique selon la revendication 5, **caractérisé en ce que** la force coercitive du pigment d'oxyde de chrome magnétique dans la couche inférieure est de 20 à 30 kA/m.

7. Support d'enregistrement magnétique selon les revendications 1 à 4, **caractérisé en ce que** le pigment magnétique dans la couche inférieure est un pigment de γ-Fe₂O₃ dopé ou non dopé présentant une force coercitive H_{c} de 15 à 80 kA/m et une surface BET de 30 à 50 m²/g.

8. Support d'enregistrement magnétique selon la revendication 7, **caractérisé en ce que** le pigment magnétique dans la couche inférieure est un pigment de γ-Fe₂O₃ dopé avec du cobalt.

9. Support d'enregistrement magnétique selon la revendication 7 ou 8, **caractérisé en ce que** la force coercitive du pigment de γ-Fe₂O₃ dans la couche inférieure est de 50 à 70 kA/m.

10. Support d'enregistrement magnétique selon les revendications 1 à 9, **caractérisé en ce que** le pigment magnétique dans la couche inférieure présente une longueur moyenne des particules de 0,05 à 0,25 µm.

11. Support d'enregistrement magnétique selon la revendication 10, **caractérisé en ce que** la longueur moyenne des particules du pigment magnétique dans la couche inférieure est de 0,1 à 0,2 µm.

12. Support d'enregistrement magnétique selon la revendication 1, **caractérisé en ce que** la couche inférieure contient en outre un pigment non magnétique.

13. Support d'enregistrement magnétique selon la revendication 12, **caractérisé en ce que** le pigment non magnétique est du α-Fe₂O₃.
